# EUROPÄISCHE PATENTSCHRIFT

(11) **EP 4 086 674 B1**
(45) Veröffentlichungstag und Bekanntmachung des Hinweises auf die Patenterteilung: **05.06.2024**
(21) Anmeldenummer: 22170358.0
(22) Anmeldetag: 27.04.2022
(51) Int. Cl.: G02B 6/00, G02F 1/13357, F21V 8/00

(54) **BAUGRUPPE FÜR DEN EINBAU IN EINER HINTERGRUNDBELEUCHTUNG EINES DISPLAYS**
ASSEMBLY FOR MOUNTING IN A DISPLAY BACKLIGHT
ENSEMBLE POUR MONTAGE DANS UN RETROÉCLAIRAGE D'AFFICHAGE

(30) Priorität: 05.05.2021 DE 102021204507
(43) Veröffentlichungstag der Anmeldung: 09.11.2022
(73) Patentinhaber: Continental Automotive Technologies GmbH, 30175 Hannover (DE)
(72) Erfinder: Kalender, Sait, 60488 Frankfurt am Main (DE); Thomas, Jörg, 60488 Frankfurt am Main (DE); Jakoby, Oliver, 60488 Frankfurt am Main (DE); Arnold, Nils, 60488 Frankfurt am Main (DE)
(74) Vertreter: Continental Corporation

(56) Entgegenhaltungen:
- KR-A- 20100 112 679
- US-A1- 2004 135 936
- US-A1- 2014 029 295
- US-A1- 2018 074 249

## Beschreibung

Die vorliegende Erfindung betrifft eine Baugruppe für den Einbau in eine Hintergrundbeleuchtung eines Displays, die einen Abstandshalter aufweist, und ein Display mit einer Hintergrundbeleuchtung mit einer solchen Baugruppe.

Hintergrundbeleuchtungen von Displays basieren heutzutage in den meisten Fällen auf Lichtleitern, in die das Licht von mehreren Leuchtdioden eingekoppelt wird. Das Licht propagiert im Lichtleiter durch Totalreflexion und wird mit Hilfe von Mikrostrukturen auf dem Lichtleiter wieder ausgekoppelt, sodass eine homogene Lichtverteilung entsteht. Dieser Aufbau ermöglicht eine sehr kompakte und effiziente Beleuchtung von Displays mit einer breiten Abstrahlcharakteristik.

In diesem Zusammenhang beschreibt US 2008/0123015 A1 ein Flüssigkristallmodul mit einem Flüssigkristallpanel, optischen Folien, einer Lichtquelle, einem Rahmen und flexiblen Leiterplatten. Der Rahmen beherbergt das Flüssigkristallpanel, die optischen Folien und die Lichtquelle. Abstandshalter sorgen dafür, dass die optischen Folien vom Flüssigkristallpanel beabstandet sind.

DE 10 2008 039 642 A1 beschreibt eine Anzeigevorrichtung mit einer filmförmigen Lichtleiterplatteneinheit. Die Lichtleiterplatteneinheit weist eine filmförmige Lichtleiterplatte und einen aus einem Filmmaterial gefertigten Trägerrahmen auf.

Der Trägerrahmen ist derartig ausgebildet, dass er den Außenumfangsrand der filmförmigen Lichtleiterplatte hält. Innerhalb des Trägerrahmens sind optische Folien angeordnet, die die filmförmige Lichtleiterplatte, eine Diffusionsfolie, eine Prismenfolie und dergleichen umfassen.

US 2014/0029295 A1 beschreibt eine Anzeigevorrichtung mit einem Gehäuse, einem Rahmen, der mit dem Gehäuse verbunden ist, und einem Anzeigemodul. Das Anzeigemodul umfasst eine rückseitige Abdeckung, die mit dem Rahmen verbunden ist, eine Lichtleiterplatte, ein Trägerelement, ein Anzeigepaneel und einen optischen Filmstapel. Die Lichtleiterplatte wird von der rückseitigen Abdeckung getragen. Mindestens zwei Seiten der Rückseite der Lichtleiterplatte sind an der hinteren Abdeckung befestigt. US 2004/135936 A1 und US 2018/074249 A1 gehören auch zum Stand der Technik, der nützlich für das Verständnis der Erfindung ist.

Zunehmend kommen Aufbauten mit zwei oder mehr Lichtleitern zum Einsatz, die zudem mehrere optische Folien aufweisen. Die Folien und Lichtleiter dürfen dabei nicht miteinander verpresst werden. Jedoch darf der Abstand zwischen den Teilen auch nicht beliebig erhöht werden bzw. muss minimiert werden. Für bisherige Displays werden alle Bestandteile der Hintergrundbeleuchtung einzeln in ein Gehäuse eingelegt und mit einem abschließenden Bauteil verschlossen. Insbesondere für Aufbauten mit zwei oder mehr Lichtleitern ist das Positionieren und Zentrieren mehrerer Lichtleiter besonders herausfordernd und führt zu einem größeren Toleranzaufbau zwischen den Komponenten der Hintergrundbeleuchtung und somit zu einer schlechteren Realisierung der optischen Leistungsmerkmale.

In diesem Zusammenhang beschreibt KR 2010 0112679 A eine Anzeigevorrichtung, die in der Lage ist, einen Betrachtungswinkel zu steuern. Die Anzeigevorrichtung umfasst eine erste Hintergrundbeleuchtungseinheit, eine zweite Hintergrundbeleuchtungseinheit, eine Lichtwegbegrenzungsplatte und ein Anzeigepaneel. Die beiden Hintergrundbeleuchtungseinheiten und das Anzeigepaneel werden von einem Rahmen gehalten.

Es ist Aufgabe der vorliegenden Erfindung, verbesserte Lösungen für die Ausgestaltung einer Hintergrundbeleuchtung für ein Display bereitzustellen.

Diese Aufgabe wird durch eine Baugruppe gemäß Anspruch 1 für den Einbau in eine Hintergrundbeleuchtung eines Displays gelöst. Bevorzugte Ausgestaltungen der Erfindung sind Gegenstand der abhängigen Ansprüche.

Gemäß einem ersten Aspekt der Erfindung weist eine Baugruppe für den Einbau in eine Hintergrundbeleuchtung eines Displays einen Abstandshalter, einen ersten Lichtleiter, einen zweiten Lichtleiter und einen Folienstapel auf. Der Abstandshalter weist zumindest einen Steg auf. Der Steg weist dabei Befestigungsflächen für eine Befestigung des ersten Lichtleiters und des zweiten Lichtleiters und eine Aufnahme für den Folienstapel auf. Der erste Lichtleiter und der zweite Lichtleiter sind mittels optisch klarer Klebefolien an den Befestigungsflächen des Abstandshalters befestigt.

Bei der erfindungsgemäßen Lösung wird ein Abstandshalter bereitgestellt, der dazu ausgelegt ist, die einzelnen Bauteile zu einem Paket zu vereinen. Der Abstandshalter ermöglicht es, die Lichtleiter und Folien zu einer Unterbaugruppe zu vereinen. Durch den Steg mit den Befestigungsflächen wird dabei ein präziser Abstand zwischen den Lichtleitern sowie insbesondere zwischen dem Folienstapel und dem zweiten Lichtleiter gewährleistet. Der Abstandshalter verbindet somit gleichzeitig die Lichtleiter und stellt den Abstand ein. Auf diese Weise werden optimale optische Eigenschaften des Aufbaus erreicht. Zudem kann auf ein zusätzliches Halteelement, einen sogenannten Retainer, verzichtet werden.

Eine solche Baugruppe kann vorgefertigt werden, so dass die Taktzeit der Endmontage reduziert werden kann. Im Gesamtgerät werden nur die Aufnahmen für eine Baugruppe statt für mehrere Einzelteile benötigt. Die Baugruppe ermöglicht eine hohe Integration mit geringen Toleranzen sowie einen kompakten Aufbau. Dies erlaubt eine schlanke Gestaltung des Gesamtgerätes mit schmalen Rändern.

Die Fixierung des Abstandshalters mit den einzelnen Bestandteilen zu einem Paket erfolgt vorzugsweise mit einem doppelseitigen transparenten Klebeband mit niedrigem Brechungsindex. Durch eine solche Verklebung der Komponenten wird ein robuster Aufbau mit reduzierter Anfälligkeit gegenüber Klappergeräuschen erzielt. Gleichzeitig sind hervorragende optische Eigenschaften gewährleistet.

Gemäß einem Aspekt der Erfindung weist der Abstandshalter Ausrichtungselemente zur Ausrichtung des ersten Lichtleiters, des zweiten Lichtleiters oder des Folienstapels auf. In den Abstandshalter können Geometrien eingearbeitet sein, z.B. Anschlagsflächen, Anschlagsrippen, Öffnungen etc., die für die Positionierung der Bestandteile genutzt werden und eine fehlerhafte Montage verhindern. Durch solche Ausrichtungselemente kann das Positionieren und Zentrieren der Teile im Gesamtgerät hinsichtlich des Toleranzaufbaus optimiert werden. Zudem kommen die Lichtleiter ihrerseits ohne bzw. mit nur wenigen zusätzlichen Geometrien aus, wie z.B. Pins, Rippen, Laschen, Einkerbungen etc. Dies sorgt dafür, dass das Licht bei der Ausbreitung in den Lichtleitern nicht nachteilig beeinflusst wird.

Gemäß einem Aspekt der Erfindung ist die Aufnahme für den Folienstapel durch eine Aussparung des zumindest einen Stegs gebildet. Auf diese Weise wird im Steg eine Anlagefläche für den Folienstapel realisiert, mittels derer besonders zuverlässig der präzise Abstand zwischen dem Folienstapel und dem zweiten Lichtleiter sichergestellt werden kann.

Gemäß einem Aspekt der Erfindung ist der Abstandshalter ausgestaltet, den ersten Lichtleiter und den zweiten Lichtleiter optisch voneinander abzuschotten. Auf diese Weise ist gewährleistet, dass keine unerwünschte Einkopplung von Licht in die Lichtleiter erfolgt. Der Abstandshalter kann dazu beispielsweise die Funktion einer Reflexionsfläche übernehmen.

Gemäß einem Aspekt der Erfindung ist der Abstandshalter für eine Verwendung als Positionierelement und Haltelement im Display ausgestaltet. Zu diesem Zweck kann der Abstandshalter zusätzliche Geometrien aufweisen, mit deren Hilfe sich der Abstandshalter im Gesamtgerät positionieren und fixieren lässt. Dies vereinfacht die Montage des Abstandshalters im Gesamtgerät.

Gemäß einem Aspekt der Erfindung haben die Materialien des Abstandshalters, des ersten Lichtleiters und des zweiten Lichtleiters einen im Wesentlichen gleichen Ausdehnungskoeffizienten. Durch die Auswahl geeigneter Materialien mit gleichen oder zumindest ähnlichen Ausdehnungskoeffizienten ist die Lichtleiterbaugruppe über einen großen Temperaturbereich nicht anfällig gegenüber optischen oder geometrischen Toleranzen. Dies ist besonders vorteilhaft für Anwendungen im Automobilbereich. Beispielsweise können die verschiedenen Komponenten aus dem gleichen Grundmaterial bestehen, z.B. Polycarbonat.

Vorzugsweise verwendet ein Display eine Hintergrundbeleuchtung mit einer erfindungsgemäßen Baugruppe. Ein solches Display kann beispielsweise in einem Fortbewegungsmittel verbaut sein, z.B. in einem Kraftfahrzeug. Die Hintergrundbeleuchtung weist bevorzugt eine benachbart zur Baugruppe angeordnete Leiterplatte mit zwei oder mehr Lichtquellen auf. Durch den robusten Aufbau und die geringe Anfälligkeit gegenüber Klappergeräuschen ist eine erfindungsgemäße Hintergrundbeleuchtung besonders gut für die hohen im Automobilbereich auftretenden Belastungen geeignet.

Weitere Merkmale der vorliegenden Erfindung werden aus der nachfolgenden Beschreibung und den angehängten Ansprüchen in Verbindung mit den Figuren ersichtlich.

### Figurenübersicht

Fig. 1 zeigt schematisch einen Schnitt durch ein Display mit einer Hintergrundbeleuchtung gemäß dem Stand der Technik;
Fig. 2 zeigt schematisch eine Explosionsansicht einer erfindungsgemäßen Baugruppe für eine Hintergrundbeleuchtung eines Displays;
Fig. 3 zeigt schematisch eine Draufsicht auf eine erfindungsgemäße Baugruppe für eine Hintergrundbeleuchtung eines Displays;
Fig. 4 zeigt schematisch einen Schnitt entlang einer ersten Ebene durch eine erfindungsgemäße Baugruppe für eine Hintergrundbeleuchtung eines Displays;
Fig. 5 zeigt schematisch einen Schnitt entlang einer zweiten Ebene durch eine erfindungsgemäße Baugruppe für eine Hintergrundbeleuchtung eines Displays; und
Fig. 6 zeigt schematisch ein Fortbewegungsmittel, in dem eine erfindungsgemäße Lösung realisiert ist.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

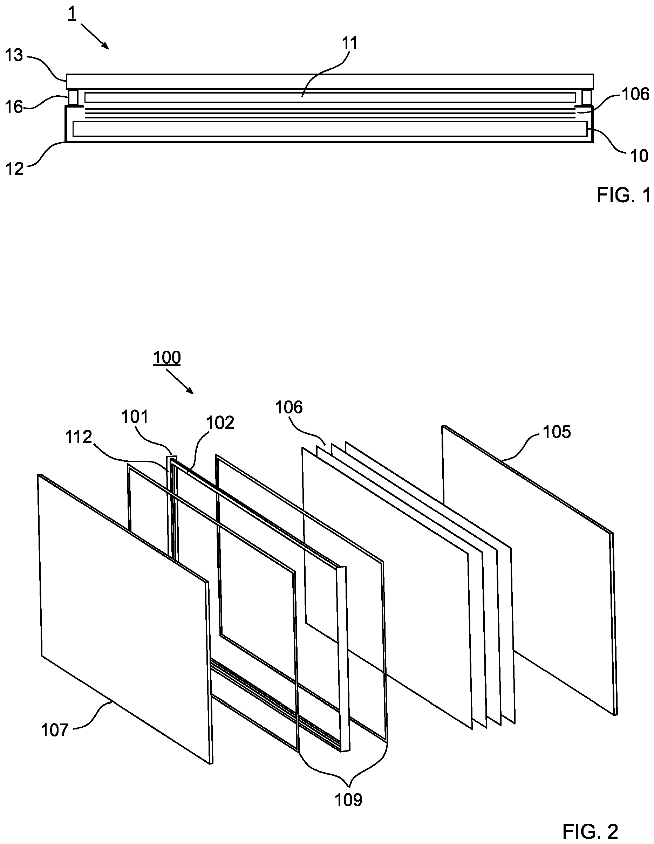

Fig. 1 zeigt schematisch einen Schnitt durch ein Display 1 mit einer Hintergrundbeleuchtung gemäß dem Stand der Technik. Das Display 1 umfasst ein Display-Panel 11 und eine Hintergrundbeleuchtung 10 für das Display-Panel 11. Zwischen der Hintergrundbeleuchtung 10 und dem Display-Panel 11 können in Form eines Folienstapels 106 zusätzliche optische Schichten angeordnet sein, z.B. Polarisationsfilter, lichtrichtende Folien (Prismenfolien, Linsenfolien, etc.) oder lichtstreuende Folien (Diffusoren). Die Hintergrundbeleuchtung 10 und der Folienstapel 106 sind in einem Gehäuse 12 des Displays 1 angeordnet und bilden eine erste Baugruppe. Das Gehäuse 12 ist zur Umgebung hin durch ein Deckglas 13 abgeschlossen, das zusammen mit dem Display-Panel 11 eine zweite Baugruppe bildet. Beide Baugruppen werden durch eine Klebeverbindung 16 zusammengehalten, z.B. mit Flüssigkleber. Bei dem Display-Panel 11 kann es sich beispielsweise um eine Flüssigkristallanzeige (LCD; Liquid Crystal Display) handeln.

Fig. 2 zeigt schematisch eine Explosionsansicht einer erfindungsgemäßen Baugruppe 100 für eine Hintergrundbeleuchtung eines Displays. Die Baugruppe 100 umfasst in diesem Beispiel einen ersten Lichtleiter 105, eine Anzahl optischer Folien, die gemeinsam einen Folienstapel 106 bilden, einen Abstandshalter 101 und einen zweiten Lichtleiter 107. Zur Befestigung des ersten Lichtleiters 105 und des zweiten Lichtleiters 107 am Abstandshalter 101 weist die Baugruppe 100 zudem zwei optisch klare Klebefolien 109 auf. Bei den Klebefolien 109 handelt es sich vorzugsweise um doppelseitiges transparentes Klebeband mit niedrigem Brechungsindex. Der Abstandshalter 101 weist in diesem Ausführungsbeispiel auf drei Seiten einen Rahmen 112 und einen Steg 102 auf. Auf einer Seite, an der Licht in die Lichtleiter 105, 107 eingekoppelt werden soll, weist der Abstandshalter 101 lediglich einen Steg 102 auf. Der Rahmen 112 kann aber auch an weniger als drei Seiten des Abstandshalters 101 ausgebildet sein oder sogar vollständig entfallen. In diesem Fall können Wände zur Lichtabschottung separat aufgebracht werden. Vorzugsweise haben die Materialien des Abstandshalters 101, des ersten Lichtleiters 105 und des zweiten Lichtleiters 107 einen im Wesentlichen gleichen Ausdehnungskoeffizienten. Zu diesem Zweck können die verschiedenen Komponenten aus dem gleichen Grundmaterial bestehen, z.B. Polycarbonat.

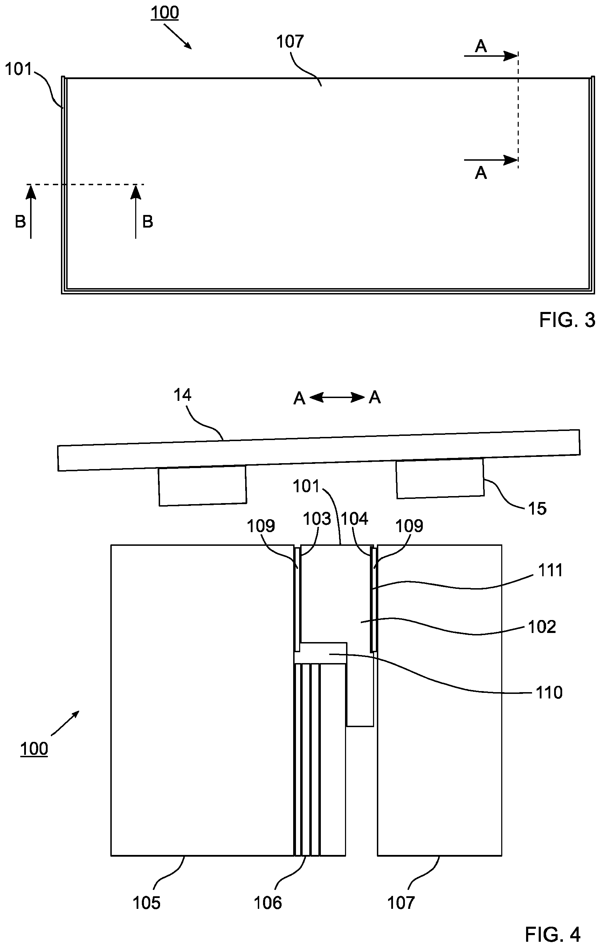

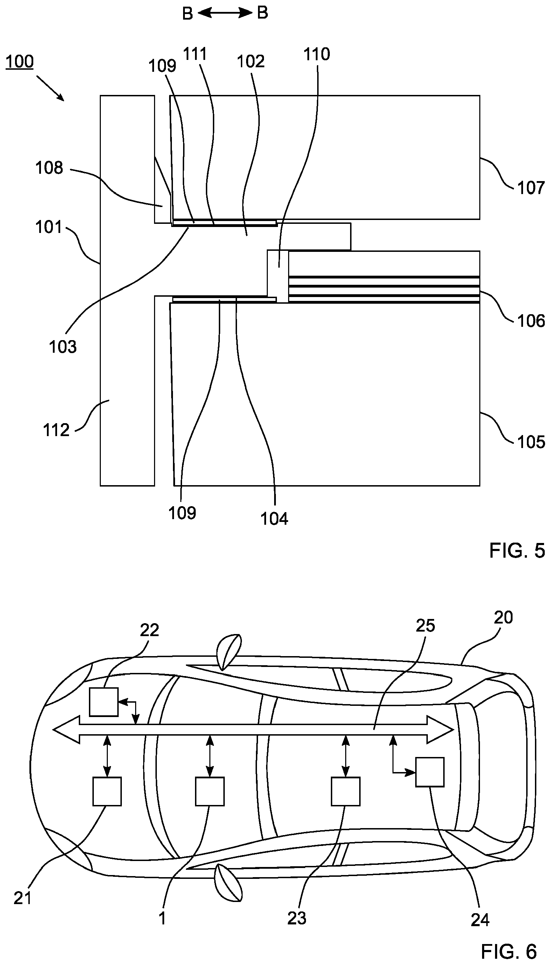

Fig. 3 zeigt schematisch eine Draufsicht auf eine erfindungsgemäße Baugruppe 100 für eine Hintergrundbeleuchtung eines Displays. Zu sehen sind in dieser Ansicht lediglich der Abstandshalter 101 sowie der zweite Lichtleiter 107. Die restlichen Komponenten der Baugruppe 100 sind verdeckt. Eingezeichnet ist zudem die Lage zwei Schnittebenen A-A und B-B, die in Fig. 4 und Fig. 5 dargestellt sind und Details des Aufbaus der Baugruppe 100 wiedergeben.

Fig. 4 zeigt schematisch einen Schnitt entlang einer ersten Ebene durch die erfindungsgemäße Baugruppe 100 für eine Hintergrundbeleuchtung eines Displays. Dabei ist in Fig. 4 der Schnitt entlang der Ebene A-A aus Fig. 3 dargestellt. Gut zu erkennen sind der erste Lichtleiter 105, der auf dem ersten Lichtleiter 105 angeordnete Folienstapel 106 sowie der zweite Lichtleiter 107. Die beiden Lichtleiter 105, 107 sind mittels der Klebefolien 109 mit Befestigungsflächen 103, 104 des Stegs 102 des Abstandshalters 101 verklebt. Zur Aufnahme der Klebefolie 109 kann der Steg 102 eine Vertiefung 111 aufweisen. Eine Aussparung 110 des Abstandshalters 101 bildet eine Aufnahme für den Folienstapel 106. Durch den Steg 102 mit den Befestigungsflächen 103, 104 wird ein präziser Abstand zwischen den Lichtleitern 105, 107 sowie insbesondere zwischen dem Folienstapel 106 und dem zweiten Lichtleiter 107 gewährleistet. Der Abstandshalter 101 verbindet somit gleichzeitig die Lichtleiter 105, 107 und stellt den Abstand ein. Zudem schottet er den ersten Lichtleiter 105 und den zweiten Lichtleiter 107 optisch voneinander ab. Benachbart zur Baugruppe 100 ist eine Leiterplatte 14 angeordnet, auf der sich Lichtquellen 15 befinden. Das von diesen Lichtquellen 15 ausgestrahlte Licht wird in die Lichtleiter 105, 107 eingekoppelt und zur Hinterleuchtung des Display-Panels genutzt. Aus diesem Grund weist der Abstandshalter 101 an dieser Seite keinen Rahmen auf.

Fig. 5 zeigt schematisch einen Schnitt entlang einer zweiten Ebene durch die erfindungsgemäße Baugruppe 100 für eine Hintergrundbeleuchtung eines Displays. Dabei ist in Fig. 5 der Schnitt entlang der Ebene B-B aus Fig. 3 dargestellt. Gut zu erkennen sind wiederum der erste Lichtleiter 105, der auf dem ersten Lichtleiter 105 angeordnete Folienstapel 106, der zweite Lichtleiter 107 sowie die Klebefolien 109, mittels derer die beiden Lichtleiter 105, 107 mit dem Steg 102 des Abstandshalters 101 verklebt sind. Eine der Klebefolien 109 ist wie zuvor in einer Vertiefung 111 des Stegs 102 angeordnet. In dieser Schnittebene ist zudem der Rahmen 112 des Abstandshalters 101 zu sehen. Der Abstandshalter 101 bzw. der Rahmen 112 kann zusätzliche Geometrien aufweisen (nicht dargestellt), mit deren Hilfe sich der Abstandshalter 101 im Gesamtgerät positionieren und fixieren lässt. Auf diese Weise dient der Abstandshalter 101 zugleich als Positionierelement und Haltelement im Display. Ebenfalls in Fig. 5 gezeigt ist ein Ausrichtungselement 108. Mittels solcher Ausrichtungselemente 108 kann die Positionierung der Bestandteile vereinfacht und eine fehlerhafte Montage verhindert werden. Das Ausrichtungselement 108 kann beispielsweise als Anschlagsfläche, Anschlagsrippe, Öffnung etc. ausgestaltet sein. Im dargestellten Beispiel ist lediglich für den zweiten Lichtleiter 107 ein Ausrichtungselement 108 vorgesehen. Zusätzlich oder alternativ können entsprechende Ausrichtungselemente 108 aber auch zur Ausrichtung des ersten Lichtleiters 105 oder des Folienstapels genutzt werden.

Fig. 6 zeigt schematisch ein Fortbewegungsmittel 20, in dem eine erfindungsgemäße Lösung realisiert ist. Bei dem Fortbewegungsmittel 20 handelt es sich in diesem Beispiel um ein Kraftfahrzeug. Das Kraftfahrzeug weist zumindest ein Assistenzsystem 21 auf, das einen Bediener des Kraftfahrzeugs im Fahrbetrieb unterstützt, sowie ein Navigationssystem 22. Vom Assistenzsystem 21 oder vom Navigationssystem 22 bereitgestellte Informationen können auf einen erfindungsgemäßen Display 1 angezeigt werden. Beispielsweise kann es sich bei dem Display 1 über ein Kombiinstrument handeln. Mittels einer Datenübertragungseinheit 23 kann eine Verbindung zu einem Backend aufgebaut werden, z.B. um aktualisierte Software für die Komponenten des Kraftfahrzeugs zu beziehen. Zur Speicherung von Daten ist ein Speicher 24 vorhanden. Der Datenaustausch zwischen den verschiedenen Komponenten des Kraftfahrzeugs erfolgt über ein Netzwerk 25.

### Bezugszeichenliste

- 1: Display
- 10: Hintergrundbeleuchtung
- 100: Baugruppe
- 101: Abstandshalter
- 102: Steg
- 103: Befestigungsfläche
- 104: Befestigungsfläche
- 105: Erster Lichtleiter
- 106: Folienstapel
- 107: Zweiter Lichtleiter
- 108: Ausrichtungselement
- 109: Klebefolie
- 110: Aussparung
- 111: Vertiefung
- 112: Rahmen
- 11: Display-Panel
- 12: Gehäuse
- 13: Deckglas
- 14: Leiterplatte
- 15: Lichtquelle
- 16: Klebeverbindung

- 20: Fortbewegungsmittel
- 21: Assistenzsystem
- 22: Navigationssystem
- 23: Datenübertragungseinheit
- 24: Speicher
- 25: Netzwerk

## Patentansprüche

1. Baugruppe (100) für den Einbau in eine Hintergrundbeleuchtung (10) eines Displays (1), mit einem Abstandshalter (101), einem ersten Lichtleiter (105), einem zweiten Lichtleiter (107) und einem Folienstapel (106), wobei der Abstandshalter (101) zumindest einen Steg (102) mit Befestigungsflächen (103, 104) für eine Befestigung des ersten Lichtleiters (105) und des zweiten Lichtleiters (107) aufweist, **dadurch gekennzeichnet, dass** der Steg eine Aufnahme für den Folienstapel (106) aufweist, und wobei der erste Lichtleiter (105) und der zweite Lichtleiter (107) mittels optisch klarer Klebefolien (109) an den Befestigungsflächen (103, 104) des Abstandshalters (101) befestigt sind.

2. Baugruppe (100) gemäß Anspruch 1, wobei der Abstandshalter (101) Ausrichtungselemente (108) zur Ausrichtung des ersten Lichtleiters (105), des zweiten Lichtleiters (107) oder des Folienstapels (106) aufweist.

3. Baugruppe (100) gemäß Anspruch 1 oder 2, wobei die Aufnahme für den Folienstapel (106) durch eine Aussparung (110) des zumindest einen Stegs (102) gebildet ist.

4. Baugruppe (100) gemäß einem der vorherigen Ansprüche, wobei der Abstandshalter (101) ausgestaltet ist, den ersten Lichtleiter (105) und den zweiten Lichtleiter (107) optisch voneinander abzuschotten.

5. Baugruppe (100) gemäß einem der vorherigen Ansprüche, wobei der Abstandshalter (101) als Positionierelement und Haltelement im Display (1) ausgestaltet ist.

6. Baugruppe (100) gemäß einem der vorherigen Ansprüche, wobei es sich bei den Klebefolien (109) um doppelseitiges transparentes Klebeband mit niedrigem Brechungsindex handelt.

7. Baugruppe (100) gemäß einem der vorherigen Ansprüche, wobei die Materialien des Abstandshalters (101), des ersten Lichtleiters (105) und des zweiten Lichtleiters (107) einen im Wesentlichen gleichen Ausdehnungskoeffizienten haben.

8. Baugruppe (100) gemäß Anspruch 7, wobei der Abstandshalter (101), der erste Lichtleiter (105) und der zweite Lichtleiter (107) aus dem gleichen Grundmaterial bestehen.

9. Display (1) mit einer Hintergrundbeleuchtung (10), wobei die Hintergrundbeleuchtung (10) eine Baugruppe (100) gemäß einem der vorherigen Ansprüche aufweist.

10. Display (1) gemäß Anspruch 9, wobei die Hintergrundbeleuchtung (10) eine Leiterplatte (14) mit zwei oder mehr Lichtquellen (15) aufweist.

## Claims

1. Assembly (100) for installation in a backlight (10) of a display (1), comprising a spacer (101), a first light guide (105), a second light guide (107) and a sheet stack (106), wherein the spacer (101) has at least one crosspiece (102) with attachment areas (103, 104) for attachment of the first light guide (105) and the second light guide (107), **characterized in that** the crosspiece has a receptacle for the sheet stack (106), and wherein the first light guide (105) and the second light guide (107) are attached at the attachment areas (103, 104) of the spacer (101) by means of optically clear adhesive films (109).

2. Assembly (100) according to Claim 1, wherein the spacer (101) has alignment elements (108) for aligning the first light guide (105), the second light guide (107), or the sheet stack (106).

3. Assembly (100) according to Claim 1 or 2, wherein the receptacle for the sheet stack (106) is formed by a cutout (110) in the at least one crosspiece (102).

4. Assembly (100) according to any of the preceding claims, wherein the spacer (101) is designed to optically screen off the first light guide (105) and the second light guide (107) from one another.

5. Assembly (100) according to any of the preceding claims, wherein the spacer (101) is designed as a positioning element and holding element in the display (1).

6. Assembly (100) according to any of the preceding claims, wherein the adhesive films (109) are double-sided transparent adhesive tape with a low refractive index.

7. Assembly (100) according to any of the preceding claims, wherein the materials of the spacer (101), of the first light guide (105) and of the second light guide (107) have substantially the same coefficient of expansion.

8. Assembly (100) according to Claim 7, wherein the spacer (101), the first light guide (105) and the second light guide (107) consist of the same basic material.

9. Display (1) comprising a backlight (10), wherein the backlight (10) has an assembly (100) according to any of the preceding claims.

10. Display (1) according to Claim 9, wherein the backlight (10) has a printed circuit board (14) with two or more light sources (15).

## Revendications

1. Sous-ensemble (100) destiné à être monté dans un rétroéclairage (10) d'un dispositif d'affichage (1), comprenant une entretoise (101), un premier guide de lumière (105), un deuxième guide de lumière (107) et une pile de films (106), l'entretoise (101) possédant au moins un élément jointif (102) pourvu de surfaces de fixation (103, 104) pour une fixation du premier guide de lumière (105) et du deuxième guide de lumière (107), **caractérisé en ce que** l'élément jointif possède un logement pour la pile de films (106), et le premier guide de lumière (105) et le deuxième guide de lumière (107) étant fixés sur les surfaces de fixation (103, 104) de l'entretoise (101) au moyen de films adhésifs (109) optiquement clairs.

2. Sous-ensemble (100) selon la revendication 1, l'entretoise (101) possédant des éléments d'orientation (108) destinés à orienter le premier guide de lumière (105), le deuxième guide de lumière (107) ou la pile de films (106).

3. Sous-ensemble (100) selon la revendication 1 ou 2, le logement pour la pile de films (106) étant formé par un évidement (110) de l'au moins un élément jointif (102).

4. Sous-ensemble (100) selon l'une des revendications précédentes, l'entretoise (101) étant configurée pour isoler optiquement le premier guide de lumière (105) et le deuxième guide de lumière (107) l'un de l'autre.

5. Sous-ensemble (100) selon l'une des revendications précédentes, l'entretoise (101) étant réalisée sous la forme d'un élément de positionnement et d'un élément de maintien dans le dispositif d'affichage (1).

6. Sous-ensemble (100) selon l'une des revendications précédentes, les films adhésifs (109) étant des rubans adhésifs transparents double face à faible indice de réfraction.

7. Sous-ensemble (100) selon l'une des revendications précédentes, les matériaux de l'entretoise (101), du premier guide de lumière (105) et du deuxième guide de lumière (107) ayant un coefficient de dilatation sensiblement identique.

8. Sous-ensemble (100) selon la revendication 7, l'entretoise (101), le premier guide de lumière (105) et le deuxième guide de lumière (107) étant constitués du même matériau de base.

9. Dispositif d'affichage (1) comprenant un rétroéclairage (10), le rétroéclairage (10) possédant un sous-ensemble (100) selon l'une des revendications précédentes.

10. Dispositif d'affichage (1) selon la revendication 9, le rétroéclairage (10) possédant une carte à circuit imprimé (14) comportant deux sources lumineuses (15) ou plus.
